# EUROPÄISCHE PATENTSCHRIFT

(11) **EP 2 820 322 B1**
(45) Veröffentlichungstag und Bekanntmachung des Hinweises auf die Patenterteilung: **28.11.2018**
(21) Anmeldenummer: 13701991.5
(22) Anmeldetag: 24.01.2013
(51) Int. Cl.: F16F 13/22, F16F 13/26

(54) **HYDROLAGER**
HYDROBEARING
PALIER HYDRAULIQUE

(30) Priorität: 27.02.2012 DE 102012101561
(43) Veröffentlichungstag der Anmeldung: 07.01.2015
(73) Patentinhaber: ContiTech Vibration Control GmbH, 30165 Hannover (DE)
(72) Erfinder: GENDERJAHN, Robert, 30625 Hannover (DE); MARIENFELD, Peter-Michael, 31608 Marklohe (DE); KARKOSCH, Hans-Jürgen, 30966 Hemmingen (DE)
(74) Vertreter: Kilsch, Armin Ralph
(86) Internationale Anmeldenummer: PCT/EP2013/051293
(87) Internationale Veröffentlichungsnummer: WO 2013/127574

(56) Entgegenhaltungen:
- EP-A2- 0 163 949
- WO-A1-2011/004784
- JP-A- 59 194 141

## Beschreibung

Die Erfindung betrifft ein Hydrolager mit einer Arbeitskammer und einer Ausgleichskammer, die mit einer Hydraulikflüssigkeit gefüllt und durch eine mindestens teilweise flexible Trennwand voneinander getrennt sind, wobei die Trennwand einen Drosselkanal für die Hydraulikflüssigkeit enthält, der die Arbeitskammer mit der Ausgleichkammer verbindet, mit einem elektrisch antreibbaren Aktor, der über einen Kolben oder Stößel mit der flexiblen Trennwand oder einer in der Trennwand integrierten Steuermembran verbunden ist und auf letztere einwirkt, somit also auch auf das Hydraulikvolumen in Arbeitskammer und Ausgleichskammer einwirkt, wobei der Aktor nach Maßgabe eines Schwingungen aufnehmenden Sensors geregelt und in eine entsprechende Richtung so ausgelenkt wird, dass Druckschwankungen in der Hydraulikflüssigkeit und somit auf das Hydrolager einwirkende Schwingungen kompensiert werden.

Die WO2011004784 A1 offenbart eine Aktive Anti-Vibrations-Stützeinrichtung.

Hydrolager bzw. Hydrauliklager dienen zur elastischen Abstützung von Aggregaten, insbesondere von Kraftfahrzeugmotoren. Mit Hilfe derartiger, sich z. B. zwischen Fahrzeugmotor und Chassis befindenden Hydrolagern soll einerseits verhindert werden, dass sich Motor-Vibrationen auf das Chassis übertragen und andererseits sollen die mit dem Fahrbetrieb gegebenen Erschütterungen des Chassis gar nicht oder nur gedämpft vom Chassis an den Motor gelangen können.
Dabei ist der bekannte Konflikt in der Schwingungsisolation zu beachten, der darin besteht, dass das Lager einerseits möglichst steif sein soll, um hohe Lasten bzw.
Lagerkräfte aufnehmen zu können, und andererseits eine weiche Charakteristik aufweisen muss, um entstehende Schwingungen über einen möglichst breiten Frequenzbereich zu bedämpfen.

In ihrer Grundversion bestehen derartig Hydrauliklager üblicherweise aus einem Gummielement als Tragfeder in Verbindung mit einem hydraulischen Dämpfer. Das Gummielement ist oft als Hohl-Konus ausgebildet, welcher auch die obere Abdeckung einer auf seiner Innenseite befindlichen Arbeitskammer des hydraulischen Dämpfers darstellt. An der Tragfeder ist ein Anschlusselement zur Befestigung des Motors vorgesehen, beispielsweise ein Gewindebolzen.

Dabei besteht der hydraulische Dämpfer aus zwei Kammern, nämlich aus der genannten Arbeitskammer und eine Ausgleichskammer, welche mit einer Hydraulikflüssigkeit gefüllt sind. Arbeitskammer und eine Ausgleichskammer sind durch eine Trennwand unterteilt, in der sich mindestens ein Kanal/Drosselkanal befindet, der Arbeitskammer und Ausgleichskammer miteinander verbindet. Die Hydraulikflüssigkeit in Arbeitskammer, Ausgleichskammer und Drosselkanal bildet das gesamte Hydraulikvolumen des Hydrolagers, sofern in Sonderausführungen nicht weitere ggf. Zusatzvolumina vorgesehen sind.

Bei Belastung des Hydrolagers wird durch das Einfedern des Tragkörpers die Arbeitskammer verkleinert, so dass ein Teil der Hydraulikflüssigkeit in der Arbeitskammer durch den Drosselkanal in die Ausgleichskammer strömt. Das Durchströmen des entsprechend ausgebildeten Drosselkanals erzeugt Dissipation und somit Dämpfungsarbeit.

Die Ausgleichskammer ist üblicherweise mit mindestens einem membranartigen, in Richtung ihrer jeweiligen Flächennormalen innerhalb eines vorgegebenen Freiweges verformbaren Wandungsteil versehen, so dass der in die Arbeitskammer einströmende Teil der Hydraulikflüssigkeit aufgenommen werden kann.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Gummifeder aufgenommen, die eine relativ große Steifheit aufweist.

Niederfrequente Schwingungen, d.h. Schwingungen mit Frequenzen von ca. 5 bis 20 Hz , die im allgemeinen mit großen Amplituden auftreten, werden stark gedämpft durch das Zusammenwirken der beiden Hydraulikkammern über den Drosselkanal, also dadurch, dass ein Teil der Hydraulikflüssigkeit in der Arbeitskammer durch den Drosselkanal in die Ausgleichskammer strömt und entsprechende Dämpfungsarbeit geleistet wird.

Hochfrequente Schwingungen, also Schwingungen im Frequenzbereich oberhalb des genannten Wertes im Bereich von z.B. 50, 100 oder 200 Hz, werden aufgrund der Trägheit und Inkompressibilität der Hydraulikflüssigkeit und der Gummifeder nahezu ungedämpft durch geleitet. Diese Schwingungen treten zwar im Allgemeinen nur mit kleinen Amplituden auf, sind aber wegen ihrer akustischen Wirkung sehr lästig.

Zur Abkopplung solcher akustischer Schwingungen kann die Trennwand zwischen Arbeitskammer und eine Ausgleichskammer beispielsweise mindestens teilweise flexibel oder mit einem Freiweg ausgebildet und mit geringer Masse belegt werden. Eine solche Lösung wird jedoch bei den heutigen komfortablen Fahrzeugen nicht mehr als ausreichend angesehen.

Im Hinblick auf das Abkoppeln solcher akustischer Schwingungen werden heute die sogenannten aktiv gesteuerten Hydrolager eingesetzt, die einen Aktor/Aktuator besitzen, der über einen Kolben oder einen Stößel auf die flexible Trennwand bzw. auf eine flexibel gelagerte Trennplatte und somit auf das Hydraulikvolumen einwirken kann.

Dabei wird die Trennwand von dem Aktor nach Maßgabe eines die hochfrequenten Schwingungen aufnehmenden Sensors in eine entsprechende Richtung synchron ausgelenkt, wodurch die entsprechenden hochfrequenten Druckschwankungen der Hydraulikflüssigkeit möglichst vollständig kompensiert und die sie verursachenden hochfrequenten Schwingungen abgekoppelt werden. Durch eine solche Ansteuerung einer beweglichen Wirkfläche/Membran (auch Steuermembran genannt) in der Arbeitskammer mittels eines Aktors soll also eine Absenkung der dynamischen Federrate bewirkt werden, d.h. das Lager in den hohen Frequenzbereichen "weich" geschaltet werden.

Als Aktor können z. B. Elektromagneten oder leistungsfähigere Piezo-Aktoren (Piezo-Stacks) eingesetzt werden. Aktuatoren mit geringer Masse haben dabei den Vorteil, dass schnellere Bewegungen möglich sind und damit höhere Frequenzbereiche abgedeckt werden können.

Der Kolben oder Stößel des Aktuators ist dabei üblicherweise auf der Kolbenvorderseite vom Hydraulikvolumen/der Hydraulikflüssigkeit der Arbeitskammer und auf der Kolbenrückseite vom Hydraulikvolumen der Ausgleichskammer beaufschlagt.

Zur Kompensation von Trägheitskräften durch die Masse des Aktuatorsystems (Kolbenmasse, Stößelmasse, Magnetmasse etc.) sind auch Kolben bekannt, die rückseitig von der Hydraulikflüssigkeit in der Ausgleichkammer direkt beaufschlagt sind und vorderseitig über ein kompressibles Luftvolumen auf das Hydraulikvolumen der Arbeitskammer einwirken. Ein solches Lager mit einem so genannten "invertierten Wirkprinzip" offenbart beispielsweise die EP 0 561 703 A1, wobei die hier vorgeschlagene Lösung durch eine recht aufwendige und komplizierte Bauweise auffällt.

Sowohl bei aktiv gesteuerten Hydrolagern mit invertiertem Wirkprinzip als auch bei den geschilderten herkömmlichen aktiv gesteuerten Hydrolagern zeigt sich ein Nachteil darin, dass in Abhängigkeit der Aktormasse und/oder Aktorschwungmasse und Steifigkeit (Aktor + Steuermembran) bei bestimmten Frequenzen eine ungewünschte Resonanz auftritt. Als "Aktormasse" ist dabei die Gesamtmasse des Aktors mit allen seinen Teilen zu verstehen, während die "Aktorschwungmasse" die Masse der bewegten Aktorteile ist.

Bei Verwendung von Aktoren mit "hoher" Schwungmasse und/oder weicher Anbindung kann diese Resonanz im Arbeitsbereich der Hydrolager liegen. Diese Resonanzüberhöhung führt zu einem unerwünschten Anstieg der dynamischen Federrate des Motorlagers. Bei nicht invertiertem Wirkprinzip kann ab dieser Frequenz keine Kompensationswirkung mehr erzielt werden, da die Aktorschwungmasse sich nicht mehr frei bewegen kann. In der Folge steigt die resultierende dynamische Steifigkeit bedingt durch die Trägheit der angekoppelten Fluidmasse des Fluids sehr stark an und eine Regelung ist dann nicht mehr möglich.

Für die Erfindung bestand also die Aufgabe, ein aktiv gesteuertes Hydrolager mit einem Aktor/Aktuator bereitzustellen, der im Sinne einer Schwingungskompensation bei den genannten höheren Frequenzen von 20 bis 200 Hz auf das Hydraulikvolumen einwirken und hier einen großen Frequenzbereich abdecken kann, ohne dass Resonanzen auftreten können, die die Schwingungsisolierung des Lagers bzw. die Regelung blockieren.

Gelöst wird diese Aufgabe durch die Merkmale des Hauptanspruchs. Weitere vorteilhafte Ausbildungen sind in den Unteransprüchen offenbart.

Dabei ist der Aktor mit dem Hydrolager elastisch so gekoppelt, dass die gesamte Aktormasse oder zumindest die Aktormasse abzüglich der eigentlichen Aktorschwungmasse als Tilgermasse zur Schwingungskompensation einsetzbar ist.Die Aktorschwungmasse besteht dabei aus den bewegten Teilen des Aktors, also im wesentlichen aus Kolben und Stößel.

Der technische Effekt der Erfindung liegt darin, die Aktormasse oder die um die Aktorschwungmasse reduzierte Aktormasse als solche auch als Tilgermasse einzusetzen und so eine Tilgungswirkung zu erzielen, die eine Absenkung der dynamische Federrate des Lagers im Resonanzbereich und darüber hinaus ermöglicht.

Die Resonanz des elastisch gelagerten Aktors (Aktormasse) kann dann so abgestimmt werden, dass diese mit der Aktorlagerresonanz zusammenfällt oder auch etwas tiefer liegt als die Aktorlagerresonanz. In beiden Fallen kann einen Kompensation erzielt werden wodurch das Hydrolager auch in diesen Frequenzbereichen aktiv geregelt werden kann.

Die Aktorlagerresonanz ist die Resonanz der Aktorschwungmasse als Teilmasse der Aktormasse. Durch Zusammenfallen beider Resonanzerhöhungen kann eine Kompensation erzielt und damit eine Regelung erreicht werden .

Darüberhinaus ist auch eine Abstimmung auf Frequenzen möglich, z. B auf solche Frequenzen, in denen das Lager nicht mehr oder noch nicht arbeiten kann.

Eine vorteilhafte Weiterbildung besteht darin, dass der Aktor in einem Gehäuseteil des Hydrolagers elastisch gelagert ist. Damit ergibt sich eine besonders kompakte Baugröße, insbesondere auch im Zusammenwirken mit einer weiteren vorteilhaften Ausführung, die darin besteht, dass der Aktor in oder an dem Hydrolager mit Gummielementen und/oder Metallfederelementen gelagert ist. Die Lagerung des Aktors erfolgt so z.B. über Gummielemente durch eine geeignete Geometrieauswahl und Verpressung verbindenen Rollmembran zwischen Lager- und Aktorgehäuse.

Eine weitere vorteilhafte Ausbildung besteht darin, dass die Steifigkeit der elastischen Lagerung des Aktors verstellbar und/oder regelbar ist. Damit kann mit Erreichen bzw. nach Durchlaufen Resonanzbereiches der genannten Aktorlagerresonanz der Schwungmasse die elastische, frequenzabgestimmte Lagerung des Aktors genutzt werden, um die Masse des gesamten Aktors durch eine entsprechende verstellbare Ankopplung an das Lager in besonders abgestimmter Form als Tilgermasse zu verwendet, wobei beide Resonanzen (Resonanz der Aktorschwungmasse und Resonanz der Aktormasse) auf die gleiche Frequenz abgestimmt werden, um somit eine Kompensationswirkung zu erzeugen.

Die Beeinflussung der Frequenzlage der Resonanz kann u.a. über die Variation der Parameter Aktorgesamtmasse (=Aktormasse), Aktorschwungmasse (= im Wesentlichen bewegte Aktorkomponenten, Kolben und Stößel), Steifigkeit der Steuermembran sowie Steifigkeit der "Aktorlagerung" erfolgen. Dementsprechend besteht eine weitere vorteilhafte Ausbildung darin, dass die Steifigkeit der flexiblen Trennwand oder Steuermembran verstellbar und/oder regelbar ist.

Anhand eines Ausführungsbeispieles soll die Erfindung näher erläutert werden.

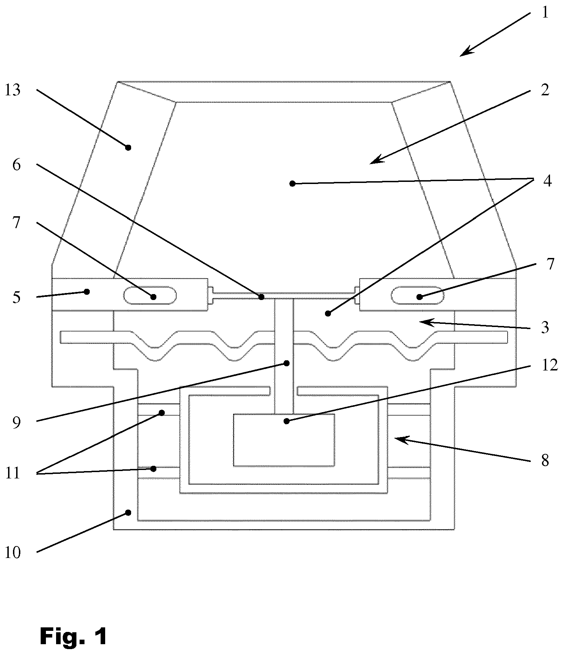

Die Fig. 1 zeigt in Form einer Skizze ein Hydrolager 1 mit einer Arbeitskammer 2 und einer Ausgleichskammer 3, die mit einer Hydraulikflüssigkeit 4 gefüllt und durch eine mindestens teilweise flexible Trennwand 5 mit einer integrierten Steuermembran 6 voneinander getrennt sind. Die Trennwand 5 weist einen Drosselkanal 7 für die Hydraulikflüssigkeit auf, der die Arbeitskammer 2 mit der Ausgleichkammer 3 verbindet.

Das Hydrolager ist mit einem als Elektromagnet ausgebildeten Aktor 8 versehen, der über einen Stößel 9 mit der flexiblen Trennwand bzw. der Steuermembran 6 verbunden und wirkt auf letztere ein.

Der Aktor 8 ist nach Maßgabe eines hier nicht näher dargestellten Sensors geregelt, der auftretende Schwingungen erfasset. Damit werden Aktor 8 und Trennwand bzw. Steuermembran 6 so ausgelenkt, dass Druckschwankungen in der Hydraulikflüssigkeit und somit auf das Hydrolager einwirkende Schwingungen kompensiert werden.

Der Elektromagnet/Aktor 8 ist in dem unteren Gehäuseteil 10 des Hydrolagers 1 mit Hilfe von Gummimembranen 11 gelagert und somit mit dem Hydrolager elastisch so gekoppelt ist, dass die Aktormasse als Tilgermasse zur Schwingungskompensation einsetzbar ist.

Die Resonanz des elastisch gelagertem Aktors 8 , d.h. der gesamten Aktormasse, kann dann so abgestimmt werden, dass diese mit der Resonanz der Aktorschwungmasse 12 zusammenfällt und sich die beiden Resonanzen kompensieren.

### Bezugszeichenliste

### (Teil der Beschreibung)

- 1: Hydrolager
- 2: Arbeitskammer
- 3: Ausgleichskammer
- 4: Hydraulikflüssigkeit
- 5: Trennwand
- 6: Steuermembran
- 7: Drosselkanal
- 8: Aktor
- 9: Stößel
- 10: Gehäuseteil
- 11: Gummimembran
- 12: Aktorschwungmasse
- 13: Gummi-Tragfeder (hohler Konus)

## Patentansprüche

1. Hydrolager (1) mit einer Arbeitskammer (2) und einer Ausgleichskammer (3), die mit einer Hydraulikflüssigkeit (4) gefüllt und durch eine mindestens teilweise flexible Trennwand (5) voneinander getrennt sind, wobei die Trennwand (5) mindestens einen Drosselkanal (7) für die Hydraulikflüssigkeit enthält, der die Arbeitskammer (2) mit der Ausgleichkammer (3) verbindet, mit einem elektrisch antreibbaren Aktor (8), der über einen Kolben oder Stößel (9) mit der flexiblen Trennwand (5) oder einer in der Trennwand integrierten Steuermembran (6) verbunden ist und auf letztere einwirkt, wobei der Aktor (8) nach Maßgabe eines Schwingungen aufnehmenden Sensors geregelt wird, damit Aktor (8) und Trennwand (59 oder Steuermembran (6) so ausgelenkt werden, dass Druckschwankungen in der Hydraulikflüssigkeit (4) und somit auf das Hydrolager einwirkende Schwingungen kompensiert werden, **dadurch gekennzeichnet, dass** der Aktor (8) mit dem Hydrolager (1) elastisch so gekoppelt ist, dass die gesamte Aktormasse oder die Aktormasse abzüglich einer im Wesentlichen die bewegten Aktorkomponenten, Kolben und Stößel umfassende Aktorschwungmasse als Tilgermasse zur Schwingungskompensation einsetzbar ist.

2. Hydrolager nach Anspruch 1, bei dem der Aktor in einem Gehäuseteil (10) des Hydrolagers elastisch gelagert ist.

3. Hydrolager nach einem der Ansprüche 1 bis 2, bei dem der Aktor in oder an dem Hydrolager mit Federelementen, insbesondere Gummielementen (11) und/oder Metallfederelementen gelagert ist.

4. Hydrolager nach einem der Ansprüche 1 bis 3, bei dem die Steifigkeit der elastischen Lagerung des Aktors verstellbar und/oder regelbar ist.

5. Hydrolager nach einem der Ansprüche 1 bis 4, bei dem die Steifigkeit der flexiblen Trennwand (5) oder Steuermembran(6) verstellbar und/oder regelbar ist.

## Claims

1. Hydraulic mounting (1) having a working chamber (2) and an equalizing chamber (3), which are filled with a hydraulic fluid (4) and are separated from one another by an at least partially flexible dividing wall (5), the dividing wall (5) containing at least one throttle channel (7) for the hydraulic fluid, which connects the working chamber (2) to the equalizing chamber (3), having an electrically drivable actuator (8), which is connected by means of a piston or tappet (9) to the flexible dividing wall (5) or a control diaphragm (6) integrated in the dividing wall and acts thereon, wherein the actuator (8) is controlled according to a sensor picking up vibrations, in order that the actuator (8) and dividing wall (59 or control diaphragm (6) are deflected to compensate for pressure fluctuations in the hydraulic fluid (4), and consequently vibrations acting on the hydraulic mounting, **characterized in that** the actuator (8) is elastically coupled to the hydraulic mounting (1) in such a way that the entire actuator mass or the actuator mass less a centrifugal actuator mass substantially comprising the moved actuator components, the piston and the tappet, can be used as an absorber mass for vibration compensation.

2. Hydraulic mounting according to Claim 1, in which the actuator is elastically mounted in a housing part (10) of the hydraulic mounting.

3. Hydraulic mounting according to one of Claims 1 to 2, in which the actuator is mounted in or on the hydraulic mounting by spring elements, in particular rubber elements (11) and/or metal spring elements.

4. Hydraulic mounting according to one of Claims 1 to 3, in which the stiffness of the elastic mounting arrangement of the actuator is adjustable and/or controllable.

5. Hydraulic mounting according to one of Claims 1 to 4, in which the stiffness of the flexible dividing wall (5) or control diaphragm (6) is adjustable and/or controllable.

## Revendications

1. Palier hydraulique (1) comprenant une chambre de travail (2) et une chambre de compensation (3) qui sont remplies d'un liquide hydraulique (4) et qui sont séparées l'une de l'autre par une paroi de séparation (5) au moins partiellement flexible, la paroi de séparation (5) contenant au moins un canal d'étranglement (7) pour le liquide hydraulique, lequel relie la chambre de travail (2) à la chambre de compensation (3), comprenant un actionneur (8) pouvant être entraîné électriquement, lequel est relié par le biais d'un piston ou d'un poussoir (9) à la paroi de séparation flexible (5) ou à une membrane de commande (6) intégrée dans la paroi de séparation et agit sur cette dernière, l'actionneur (8) étant réglé en fonction d'un capteur enregistrant les oscillations, l'actionneur (8) et la paroi de séparation (59 ou la membrane de commande (6) étant ainsi déviés de telle sorte que les varations de pression dans le liquide hydraulique (4) et donc les oscillations agissant sur le palier hydraulique soient compensées, **caractérisé en ce que** l'actionneur (8) est accouplé élastiquement au palier hydraulique (1) de telle sorte que l'ensemble de la masse de l'actionneur ou la masse de l'actionneur moins une masse oscillante de l'actionneur comprenant essentiellement les composants mobiles de l'actionneur, le piston et le poussoir, puisse être utilisée en tant que masse d'abosrbeur pour la compensation des oscillations.

2. Palier hydraulique selon la revendication 1, dans lequel l'actionneur est supporté élastiquement dans une partie de boîtier (10) du palier hydraulique.

3. Palier hydraulique selon l'une quelconque des revendications 1 à 2, dans lequel l'actionneur est supporté dans ou sur le palier hydraulique avec des éléments de ressort, en particulier des éléments en caoutchouc (11) et/ou des éléments de ressort en métal.

4. Palier hydraulique selon l'une quelconque des revendications 1 à 3, dans lequel la rigidité du support sur palier élastique de l'actionneur peut être ajustée et/ou réglée.

5. Palier hydraulique selon l'une quelconque des revendications 1 à 4, dans lequel la rigidité de la paroi de séparation flexible (5) ou de la membrane de commande (6) peut être ajustée et/ou réglée.
